Europäisches Patentamt

European Patent Office

Office européen des brevets

(19)

(11) Publication number: **0 306 238 B1**

# EUROPEAN PATENT SPECIFICATION

(12)

(45) Date of publication of patent specification: **10.03.93**    (51) Int. Cl.[5]: **C01B 33/34**

(21) Application number: **88307951.9**

(22) Date of filing: **26.08.88**

(54) ZSM-5 and its synthesis.

(30) Priority: **02.09.87 US 92505**

(43) Date of publication of application:
**08.03.89 Bulletin 89/10**

(45) Publication of the grant of the patent:
**10.03.93 Bulletin 93/10**

(84) Designated Contracting States:
**BE DE FR GB IT NL SE**

(56) References cited:
**EP-A- 0 202 797**

**CHEMICAL ABSTRACTS, vol. 101, no. 8, 20th August 1984, page 114, abstract no. 57238s, Columbus, Ohio, US; & JP-A-59 64 520 (TORAY INDUSTRIES, INC.) 12-04-1984**

**NATURE, vol. 272, no. 5652, 30th March 1978, pages 437-438, London, GB; G.T. KOKOTAILO et al.: "Structure of synthetic zeolite ZSM-5"**

**THE JOURNAL OF PHYSICAL CHEMISTRY, vol. 85, no. 15, 1981, pages 2238-2243, Easton, PA, US; D.H. OLSON et al.: "Crystal structure and structure-related properties of ZSM-5"**

(73) Proprietor: **MOBIL OIL CORPORATION**
**150 East 42nd Street**
**New York New York 10017(US)**

(72) Inventor: **Klocke, Donald Joseph**
**209 Roberts Drive**
**Somerdale New Jersey 08083(US)**
Inventor: **Krishnomurthy, Sowmithri**
**401 Barclay Walk**
**Cherry Hill New Jersey 08034(US)**

(74) Representative: **Colmer, Stephen Gary**
**Patent Department c/o Mobil Services Company Limited Mobil Court 3 Clements Inn London WC2A 2EB (GB)**

EP 0 306 238 B1

## Description

The present invention relates to ZSM-5 having a unique crystal morphology, and to its synthesis.

As described by Olsen et al in The Journal of Physical Chemistry, 1981, 85, pages 2238-2243, ZSM-5 is a high silica zeolite having a three-dimensional channel system defined by sets of parallel straight channels which intersect with and run generally perpendicular to sets of sinusoidal channels.

ZSM-5 and its syntheses in the presence of tetrapropylammonium cations was first described in U.S. Patent 3,702,886. Since then ZSM-5 has been successfully synthesized using a variety of other organic directing agents and more recently in the absence of organic directing agents. The latter is of particular commercial importance, not only because the organic directing agents employed tend to be expensive, but also because in general they have to be removed before the ZSM-5 can be used, for example, as a catalyst. In the past, however, with non-organic synthesis of ZSM-5 it has been difficult reliably to produce the zeolite as small crystals whereas for certain catalytic reactions, for example the conversion of methanol to gasoline, small crystal size is desirable so as to allow rapid diffusion of reagents and products into and out of the zeolite pores. An object of the present invention is therefore to obviate or minimize this disadvantage of currently available non-organic synthesis.

Accordingly, the invention resides in one aspect in a process for preparing ZSM-5 as claimed in claim 1, comprising the steps of:

a) providing an aqueous crystallization reaction mixture which is free of organic directing agents and which includes sources of silica, alumina and hydroxyl ions such that the solids content of the reaction mixture is at least 35 weight percent and the $OH^-/SiO_2$ mole ratio is at least 0.11;

b) effecting crystallization of said reaction mixture while continuously agitating the mixture; and

c) recovering ZSM-5 crystals from the mixture.

In a further aspect, the invention resides in a porous ZSM-5 in the form of a crystal having two dimensions of at least about 0.05 micron and a third dimension of less than about 0.02 micron, wherein the pore structure of the ZSM-5 comprises tortuous channels running substantially in the direction of said third dimension and wherein the mesitylene sorption capacity of the ZSM-5 is at least 3 weight percent.

One method for measuring the diffusion characteristics, such as crystal surface area, of a porous crystalline silicate is by determination of its capability for sorbing mesitylene. Such sorption is carried out under static conditions at room temperature under pressure for such time as necessary to effect equilibrium, e.g., a temperature of 22°C (72°F) and a pressure of 67Pa (0.5 mm Hg) for about 6 hours. The procedure is further described by Wu et al, "New Developments in Zeolite Science Technology", Proceeding of the 7th International Zeolite Conference, Tokyo, Japan, 1986, pp. 547-554 and G. R. Landolt, Anal. Chem. (1971) 43, 613. ZSM-5 produced according to the present invention can be distinguished from prior art materials by its high capacity for mesitylene sorption under these conditions, generally greater than about 3 weight percent, preferably greater than about 5 and most preferably 6 to 12 weight percent.

The method of the invention involves initially forming an aqueous crystallization reaction mixture which contains a source of silica, a source of hydroxyl ions and a source of alumina and which comprises at least 35%, preferably at least 37% weight solids. The reaction mixture is free of organic directing agents. In one preferred embodiment, the silica source is a silica precipitate which has a particle size which may vary from 1-500 micron but which preferably has an average particle size of 50-100 micron. The silica precipitate is formed by continuous precipitation from an aqueous silicate solution, which conveniently has a pH ranging from 9 to 12 and which is preferably sodium silicate solution. Precipitation is conveniently effected by introducing an acid solution, such as $H_2SO_4$, HCl, $HNO_3$, having a pH ranging from essentially 0 to 6 to the silicate solution.

Preferably, the silica is precipitated alone, i.e., in the absence of sources of other crystalline silicate framework elements, in particular aluminum. In this embodiment, both the precipitating reagent and the solution of silica source are free intentionally added alumina or alumina source so that it is necessary to add a separate source of aluminum to the ZSM-5 reaction mixture.

Alternatively, the silica precipitation can occur as coprecipitation in the presence of soluble sources of other porous crystalline silicate framework elements, notably aluminum. The soluble source of these other framework components can be e.g., nitrates. The coprecipitation product would be an amorphous aluminosilicate and so would provide at least part of the source of aluminum as well as the source of silicon to the zeolite crystallization stage.

Continuous precipitation of the amorphous silicate precursor comprises introducing the solution of silica source and the precipitating reagent to a reaction zone while maintaining a molar ratio of silica source to precipitating reagent substantially constant. In one embodiment, the precipitating reagent and the silica source are introduced simultaneously into the reaction zone.

EP 0 306 238 B1

The continuous precipitation of silica precursor effects two results. Firstly, silica gel formation is substantially eliminated and secondly the particle size of the precipitated silica precursor exceeds that at which silica gel formation is possible. The precipitated silica precursor comprises agglomerated solids in the shape of microspheres. Suspensions of these particles exhibit low viscosities at high solids loadings in subsequent processing, including zeolite synthesis, for example, even at solids loadings of 35 weight percent solids. This is in marked contrast to non-controlled neutralization which results in a solid, non-stirrable mass.

Other conditions affecting precipitation include time, pH and temperature. The temperature of the precipitation mixture can range from 80-300°F (27°C to 150°C). The time of contact of the solution of silica source and the precipitating reagent can range from about 10 minutes to several hours. Generally, the silica precursor is processed by isolating it, e.g., by filtration, and removing soluble contaminants therefrom, by washing and/or ion exchange.

The silica precipitate is mixed with the remaining components of the zeolite reaction mixture in the following proportions:

| $SiO_2/Al_2O_3$<br>$H_2O/SiO_2$ | = 25-50, preferably 30-40<br>= less than 10, preferably less than 5 |
|---|---|
| $OH^-/SiO_2$ | = at least 0.10 preferably at least 0.11, more preferably at least 0.12<br>most preferably 0.12 - 0.20 |

The temperature employed during crystallization ranges from 100 - 250°F (38 - 121°C), preferably from 190 - 230°F, (88 - 104°C). Pressure during crystallization can range from atmospheric to 50 psig (100 - 450 kPa), preferably 10 to 50 psig (100 - 450 kPa) and most preferably autogenous pressure. The duration of the crystallization procedure typically ranges from 60 to 120 hours, preferably from 80 to 100 hours.

Agitation conditions maintained during crystallization should be sufficient to produce ZSM-5 of the desired crystal size. Such conditions can be arrived at empirically, but in a 8 to 10ℓ (2 to 30 gallon) gallon reactor having a length/diameter ratio ranging from 1 to 2, sufficient agitation can be achieved by stirring at at least about 200 rpm, preferably at least about 250 rpm.

An advantage of the process of the invention is that it prepares small crystal size ZSM-5 of high mesitylene sorption capacity by a process in which no organic is added. Other advantages resulting include reduction in cost, reduction in environmental concerns due to the volatility of certain organics used in the crystallization-synthesis of ZSM-5, and reduction in porous crystalline silicate processing steps to remove the organic. Preferably the crystallization reaction mixture will contain seeds of suitable porous crystalline silicate crystals which serve to increase the rate of crystallication, preferably seeds having at least one dimension less than 0.05 micron, (i.e. having at least one dimension of 0.02-0.05 micron) and having the structure of ZSM-5. The percentage of seeds in the crystallization reaction mixture should be at least about 1% based on total solids in the reaction mixture, preferably at least about 4%, say 5-10% if non alkali-treated seeds are used. The source of seeds may be slurry from a previous crystallization, processed or unprocessed, and recycled to the zeolite reaction mixture.

The ZSM-5 prepared by the method of the present invention is of particular interest since it is in the form of a crystal having two dimensions of at least about 0.05 micron, preferably at least about .1 micron, and a third dimension of less than about 0.02 micron, preferably less than about 0.01 micron, wherein the sinusoidal channel inherent in the pore structure of ZSM-5 runs substantially in the direction of said third dimension. Such a crystal can be in the form of platelets wherein the two larger dimensions are substantially the same. The orientation of the tortuous channel can be confirmed by electron diffraction techniques.

The original cations of the ZSM-5 synthesized by the present method can be replaced, at least in part, by ion exchange with other cations. Thus, the original cations can be exchanged into the hydrogen form or a form in which the original cation has been replaced by a metal of Groups IIA, IIIA, IVA, IB, IIB, IIIB, IVB, VIB or VIII or the Periodic Table. Catalytically active forms of these would include, in particular, hydrogen, rare earth metals, aluminum, metals of Groups II and VIII or the Periodic Table and manganese.

ZSM-5, when employed either as an adsorbent or as a catalyst in a hydrocarbon conversion process, should be dehydrated at least partially. This is preferably effected by heating to a temperature in the range of from 200°C to 600°C in an inert atmosphere, such as air, nitrogen, etc. and at atmospheric or subatmospheric pressures for between 1 and 48 hours.

When used as a catalyst, it is desirable to combine the ZMS-5 prepared by the present method with another material resistant to the temperatures and other conditions employed in certain organic conversion processes. Such matrix materials include active and inactive materials and synthetic or naturally occurring zeolites as well as inorganic materials such as clays, silica and/or metal oxides, e.g. alumina. The latter may be either naturally occurring or in the form of gelatinous precipitates, sols or gels including mixtures of silica and metal oxides. Use of a material in conjunction with the zeolite ZSM-5, i.e. combined therewith, which is active, may enhance the conversion and/or selectivity of the catalyst in certain organic conversion processes. Inactive materials suitably serve as diluents to control the amount of conversion in a given process so that products can be obtained economically without employing other means for controlling the rate or reaction. Frequently, crystalline silicate materials have been incorporated into naturally occurring clays, e.g., bentonite and kaolin. These materials, i.e. clays, oxides, etc., function, in part, as binders for the catalyst. It is desirable to provide a catalyst having good physical strength, because in petroleum refinery processing, the catalyst is often subjected to conditions which tend to break the catalyst down into powder-like materials which cause problems in processing.

Naturally occurring clays which can be composited with the hereby synthesized zeolite ZSM-5 include the montmorillonite and kaolin families which include the sub bentonites, and the kaolins commonly known as Dixie, McNamee, Georgia and Florida clays, or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolite ZSM-5 catalyst hereby synthesized can be composited with a porous matrix material such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The matrix can be in the form of a cogel. A mixture of these components could also be used.

The relative proportions of finely divided crystalline silicate and inorganic oxide gel matrix vary widely with the crystalline silicate content ranging from 0.1 to 90 percent by weight, and more usually in the range of 10 to 70 percent by weight of the composite.

The ZSM-5 produced by the present process can advantageously be employed in a variety of organic conversion reactions and in particular, in the conversion of alcohols and ethers, for example, methanol and dimethyl ether, to gasoline boiling range hydrocarbons, preferably, by contact under conditions including a temperature of 100°C to 800°C, a pressure of 10 to 20000 kPa (0.1 to 200 atmospheres), a weight hourly space velocity of 0.08 hr$^{-1}$ to 2000 hr$^{-1}$ and a hydrogen/feedstock organic compound mole ratio of from 0 (no added hydrogen) to 100.

The invention will now be more particularly described with reference to the following Examples, in which the mesitylene sorption data were obtained using a static test at 22°C (72°F) and a mesitylene pressure of 0.5 mm Hg for 6 hours.

Example 1

A silica precipitate was produced using the formulations given in Table 1.

## TABLE 1

### Volume Basis

**Silicate Solution**

| | |
|---|---|
| Sodium Silicate (Q-Brand 29% SiO$_2$, 9% Na$_2$O) | 100 |
| 50% NaOH | 1.03 |
| H$_2$O (Demineralized) | 98.9 |

**Acid Solution**

| | |
|---|---|
| 24% H$_2$SO$_4$ | 67.0 |

The two solutions were reacted continuously at 30 minutes residence time in a plastic vessel equipped with an overflow and mixer. The vessel was filled with water and the silicate solution and the acid solution were pumped into the vessel in a continuous manner. The product was discharged continuously from the vessel through an overflow tube and was then collected, filtered and washed with demineralized water to be sulfate free. The resultant silica precipitate had the composition shown in Table 2:

TABLE 2

|  | Wt. Percent |
| --- | --- |
| Sulfur | 0.005 |
| Silica | 91.3 |
| Alumina | 0.1 |
| Sodium | 1.5 |
| Ash at 1000°F (542°C) | 95.53 |

Using the silica precipitate, ZSM-5 was produced in the absence of organic directing agent using the formulations of Runs A, B and C in Table 3. The analysis of the resulting product is also given in Table 3. The syntheses were carried out at 104°C (220°F) in a 19ℓ (5 gallon) autoclave stirred at 250 RPM. A seed level of 5% ZSM-5 seeds with crystal sizes below 0.05 micron was used in order to complete each synthesis within a practical time frame.

Table 3 shows the effect of solids level on the crystal size of ZSM-5, the crystal size measurements being effected by scanning electron microscopy (SEM) and transmission electron microscopy (TEM). From this table it is seen that as the solids level is increased from 33% to 37% a reduction of crystal size occurs from 0.7 to 0.2 micron. These results are further confirmed by mesitylene sorption data which increases correspondingly. Mesitylene sorption has been shown to correlate well with changes in crystal surface area (hence crystal size) of ZSM-5.

## TABLE 3

### EFFECT OF SOLIDS LEVEL ON CRYSTAL SIZE

|  | A | B | C |
| --- | --- | --- | --- |
| $SiO_2/Al_2O_3$, molar | 32 | 32 | 31.4 |
| $OH^-/SiO_2$, molar | 0.09 | 0.10 | 0.11 |
| $H_2O/SiO_2$, molar | 6.14 | 5.44 | 4.89 |
| $OH^-/H_2O$, molar | 0.015 | 0.019 | 0.022 |
| Solids, wt. % | 33 | 35.2 | 37.2 |
| Seeds, wt. % | 5.0 | 4.73 | 4.92 |
| Product Analysis |  |  |  |
| X-ray crystallinity | 75% | 70% | 60% |
| SEM, micron | 0.7 | 0.4 | -- |
| TEM, Basal Dimension, micron | -- | -- | 0.1 - 0.4 |
| Thickness, Angstrom | -- | -- | 100 |
| Mesitylene Sorption, wt % | 0.5 | 1.3 | 3.7 |

EXAMPLE 2

Using the silica precipitate produced in Example 1, ZSM-5 was produced in the absence of organic directing agent using the formulation of Runs D, E, F, and G in Table 4 below. The synthesis conditions were the same as in the previous Example.

The effect of $OH^-/SiO_2$ ratio, at a constant solids level is shown in Table 4. From this table it is seen that at a solids level of 37%, there is progressive reduction in crystal size of the ZSM-5 with increasing $OH^-/SiO_2$ ratio. A crystal size of 0.3 micron on edge was observed at a $OH^-/SiO_2$ ratio of 0.086. An increase in the above ratio to 0.124 resulted in platelets with basal dimensions of 0.1-0.4 microns and a thickness of about 0.01 micron (100A). A monotonic increase in mesitylene sorption was observed upon increasing the $OH^-/SiO_2$ molar ratio from 0.086 to 0.163.

TABLE 4

EFFECT OF CAUSTIC CONCENTRATION ON CRYSTAL SIZE

| RUN | D | E | F | G |
|---|---|---|---|---|
| $SiO_2/Al_2O_3$ | 31.9 | 31.4 | 31.9 | 32.8 |
| $OH^-/SiO_2$ | 0.09 | 0.11 | 0.12 | 0.16 |
| $H_2O/SiO_2$ | 4.89 | 4.96 | 4.87 | 4.83 |
| $OH^-/H_2O$ | 0.018 | 0.022 | 0.025 | 0.034 |
| % Solids | 37.45 | 37.18 | 37.2 | 37.1 |
| % Seeds | 5.02 | 4.9 | 5.02 | 4.9 |
| Product Analysis | | | | |
| X-ray crystallinity | 75% | 60% | 60% | 50% |
| SEM, micron | 0.3 | -- | -- | -- |
| TEM, Basal Dimension, micron | -- | 0.1-0.4 | 0.15-0.6 | 0.2-0.4 |
| Thickness, Angstrom | -- | 100 | 100 | 100 |
| Mesitylene Sorption, wt % | 0.75 | 3.7 | 7.1 | 10.6 |

Claims

1. ZSM-5 in the form of a crystal having two dimensions of at least about 0.05 micrometer and a third dimension of less than about 0.02 micrometer, wherein the pore structure of the ZSM-5 comprises tortuous channels running substantially in the direction of said third dimensions and wherein the mesitylene sorption capacity of the ZSM-5 is at least 3 weight %.

2. A process for preparing ZSM-5 as claimed in claim 1 comprising the steps of:
   a) providing an aqueous crystallization reaction mixture which is free of organic directing agents and which includes sources of silica, alumina and hydroxyl ions such that the solids content of the reaction mixture is at least 35 weight percent and the $OH^-/SiO_2$ molar ratio is at least 0.11;
   b) effecting crystallization of said reaction mixture while continuously agitating the mixture; and
   c) recovering ZSM-5 crystals from the mixture.

3. The process of claim 2 wherein at least about 1% seeds based on total solids of the crystallization reaction mixture are present in said reaction mixture.

4. The process of claim 2 or claim 3 wherein the silica source is a silica precipitate formed by addition of acid to an aqueous silicate solution.

5. The process of any one of claims 2 to 4 wherein said solids content is at least 37 weight percent.

6. The process of any one of claims 2 to 5 wherein said $OH^-/SiO_2$ molar ratio is greater than about 0.11.

7. The process of any one of claims 2 to 6 wherein the $OH^-/SiO_2$ molar ratio is 0.12 - 0.20.

8. The process of any one of claims 2 to 7 wherein said reaction mixture has a $SiO_2/Al_2O_3$ molar ratio of 25 - 50.

9. The process of claim 8 wherein said $SiO_2/Al_2O_3$ molar ratio is 30 - 40.

**Patentansprüche**

1. ZSM-5 in Form eines Kristalls mit zwei Abmessungen von mindestens etwa 0,05 $\mu$m und einer dritten Abmessung von weniger als etwa 0,02 $\mu$m, wobei die Porenstruktur des ZSM-5 gewundene Kanäle umfaßt, die im wesentlichen in Richtung der dritten Abmessung verlaufen, und worin die Sorptionskapazität für Mesitylen dieses ZSM-5 mindestens 3 Gew.-% beträgt.

2. Verfahren zur Herstellung von ZSM-5 nach Anspruch 1, welches die Schritte umfaßt:
   a) Bereitstellung einer wäßrigen Reaktionsmischung für die Kristallisation, die frei von organischen Leitmitteln ist und eine Quelle von Siliciumdioxid, Aluminiumoxid und Hydroxylionen umfaßt, so daß der Feststoffgehalt der Reaktionsmischung mindestens 35 Gew.-% und das $OH^-/SiO_2$-Molverhältnis mindestens 0,11 betragen;
   b) Durchführung der Kristallisation der Reaktionsmischung, wobei diese Mischung kontinuierlich gerührt wird; und
   c) Gewinnung der Kristalle des ZSM-5 aus der Mischung.

3. Verfahren nach Anspruch 2, worin auf der Basis der gesamten Feststoffe der Reaktionsmischung für die Kristallisation in dieser Reaktionsmischung mindestens etwa 1% Kristallkeime vorhanden sind.

4. Verfahren nach Anspruch 2 oder 3, worin die Siliciumdioxidquelle gefälltes Siliciumdioxid ist, das durch Zugabe einer Säure Zu einer wäßrigen Silicatlösung gebildet wurde.

5. Verfahren nach einem der Ansprüche 2 bis 4, worin der Feststoffgehalt mindestens 37 Gew.-% beträgt.

6. Verfahren nach einem der Ansprüche 2 bis 5, worin das $OH^-/SiO_2$-Molverhältnis größer als etwa 0,11 ist.

7. Verfahren nach einem der Ansprüche 2 bis 6, worin das $OH^-/SiO_2$-Molverhältnis 0,12-0,20 beträgt.

8. Verfahren nach einem der Ansprüche 2 bis 7, worin die Reaktionsmischung ein $SiO_2/Al_2O_3$-Molverhältnis von 25-50 aufweist.

9. Verfahren nach Anspruch 8, worin das $SiO_2/Al_2O_3$-Molverhältnis 30-40 beträgt.

**Revendications**

1. ZSM-5 sous la forme d'un cristal présentant au moins deux dimensions d'au moins 0,05 micromètre environ et une troisième dimension inférieure à 0,02 micromètre environ, dans laquelle la structure poreuse de la ZSM-5 comprend des canaux tortueux s'étendant sensiblement dans la direction de cette troisième dimension et dans laquelle la capacité de sorption de mésitylène de la ZSM-5 est au moins égale à 3% en poids.

**2.** Un procédé de préparation de ZSM-5 selon la revendication 1, comprenant les étapes suivantes:

a) on prépare un mélange réactionnel aqueux de cristallisation qui est exempt d'agents organiques d'orientation et qui comprend des sources de silice, d'alumine et d'ions hydroxyles de telle sorte que la teneur en matières sèches du mélange réactionnel soit au moins égale à 35% en poids et que le rapport molaire $OH^-/SiO_2$ soit au moins égal à 0,11;

b) on effectue la cristallisation de ce mélange réactionnel tout en agitant continûment le mélange; et

c) on sépare les cristaux de ZSM-5 du mélange.

**3.** Le procédé selon la revendication 2, caractérisé en ce qu'au moins environ 1% de germe, par rapport au poids total des matières sèches du mélange réactionnel de cristallisation, sont présents dans ce mélange réactionnel.

**4.** Le procédé selon la revendication 2 ou la revendication 3, caractérisé en ce que la source de silice est un précipité de silice formé par addition d'acide à une solution aqueuse de silicate.

**5.** Le procédé selon l'une quelconque des revendications 2 à 4, caractérisé en ce que ladite teneur en matières sèches est au moins égale à 37% en poids.

**6.** Le procédé selon l'une quelconque des revendications 2 à 5, caractérisé en ce que ledit rapport molaire $OH^-/SiO_2$ est supérieur à environ 0,11.

**7.** Le procédé selon l'une quelconque des revendications 2 à 6, caractérisé en ce que ledit rapport molaire $OH^-/SiO_2$ est compris entre 0,12 et 0,20.

**8.** Le procédé selon l'une quelconque des revendications précédentes, caractérisé en ce que ledit rapport molaire $SiO_2/Al_2O_3$ de ce mélange réactionnel est compris entre 25 et 50.

**9.** Le procédé selon la revendication 8, caractérisé en ce que ledit rapport molaire $SiO_2/Al_2O_3$ est compris entre 30 et 40.